# EUROPEAN PATENT SPECIFICATION

(11) **EP 3 551 891 B1**
(45) Date of publication and mention of the grant of the patent: **04.05.2022**
(21) Application number: 17811366.8
(22) Date of filing: 05.12.2017
(51) Int. Cl.: F04D 17/16, F04D 19/04, F04D 25/16, F04D 25/08, F04D 29/58, F04D 25/06, F04B 39/06, F04B 37/14, F04C 29/04, F04C 25/02, H02K 7/14, H05K 7/20, H02K 11/33, H02K 9/14, H02K 9/06, H02K 11/30, H02K 5/20, F04C 18/02, F04C 18/12, F04C 18/16, F04C 18/344

(54) **VACUUM PUMP WITH MOTOR AND CONTROL UNIT COOLING ARRANGEMENT**
VAKUUMPUMPE MIT ANORDNUNG ZUR KÜHLUNG DES MOTORS UND DER STEUEREINHEIT
POMPE À VIDE AVEC DISPOSITIF DE REFROIDISSEMENT DE MOTOR ET D'UNITÉ DE CONTRÔLE

(30) Priority: 08.12.2016 GB 201620923
(43) Date of publication of application: 16.10.2019
(73) Proprietor: Edwards Limited, Burgess Hill, Sussex RH15 9TW (GB)
(72) Inventor: HAYLOCK, James Alexander, Eastbourne, Sussex BN22 9BA (GB); ABDULRAHMAN, Haitham, Eastbourne, Sussex BN22 9BA (GB)
(74) Representative: Norton, Ian Andrew
(86) International application number: PCT/GB2017/053657
(87) International publication number: WO 2018/104719

(56) References cited:
- WO-A1-96/19672
- JP-A- H01 267 392
- US-A1- 2005 019 169
- US-A1- 2008 145 258

## Description

The present invention relates to a vacuum pump comprising a cooling arrangement.

Known vacuum pumps comprise a motor for driving a vacuum pumping mechanism of the pump. The motor is housed in a motor housing or a pump housing. The motor generates heat during operation and a cooling mechanism is arranged for cooling the motor. Typically the cooling mechanism is a shaft mounted fan which is rotated to generate a cooling gas flow when the motor rotates the shaft to drive the pumping mechanism. A control (such as an inverter) controls the motor and is located in a control housing. The control is connected to the motor by a cable. The control comprises electronic components which generate heat during operation and a cooling mechanism is located in or adjacent a housing of the control for cooling the control.

Known cooling arrangements are described in US20120243177; and JPH01267392; US2008145258; US2005019169 and WO9619672. All these documents teach a single fan for cooling each pump element.

The present invention provides a vacuum pump according to claim 1, comprising: a motor for driving a vacuum pumping mechanism of the pump, the motor being housed in a motor housing; a drive shaft supporting the pumping mechanism for rotation when the motor rotates the drive shaft; a motor cooling mechanism supported for rotation by the drive shaft to generate a flow of cooling gas along a first flow path for cooling the motor housing when the motor rotates the drive shaft; a control for controlling the motor, a control cooling mechanism for generating a cooling gas flow along a second flow path for guiding a cooling gas for cooling the control and for guiding the cooling gas flow to at least one opening of the control housing; wherein the control housing is arranged to be mounted in fixed relation to the motor housing with said at least one opening in or proximate to the first flow path so that the cooling gas flow along the second flow path cools the motor housing when the motor cooling mechanism is inoperative; and wherein the gas flow along the first flow path causes gas flow along the second flow path when the control cooling mechanism is inoperative.

In order that the present invention may be well understood, an embodiment thereof, which is given by way of example only, will now be described, with reference to the accompanying drawings, in which:
Figure 1 shows a vacuum pump, motor and control;
Figure 2 shows an enlarged view of part of the motor housing and control housing;
Figure 3 shows an enlarged view of a modified part of the motor housing and control housing.

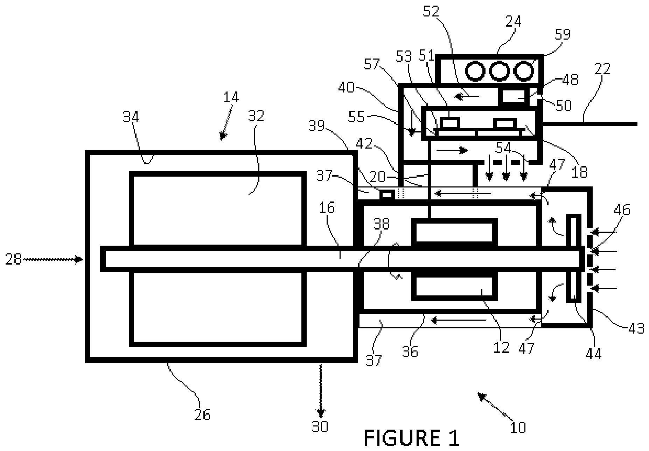

Referring to Figure 1, a vacuum pump 10 is shown comprising a motor 12 for driving a vacuum pumping mechanism 14 of the pump. The vacuum pumping mechanism is shown schematically in this example and may comprise any suitable mechanism depending on requirements, such as a rotary vane, roots, claw, screw or scroll pumping mechanism. The vacuum pumping mechanism is supported by at least one drive shaft 16 for rotation with the shaft. The shaft of the motor may be the same shaft that supports the pumping mechanism or there may be more than one shaft coupled together, a motor shaft driven by the motor and a pumping shaft supporting the pumping mechanism and coupled to the motor shaft, for example by a gear mechanism.

Additionally, in for example a roots type mechanism there are two pumping shafts whereby one shaft is driven and the other shaft is connected to the first shaft by a gear mechanism. The present invention is particularly but not exclusively suitable for roughing vacuum pumps, operating at vacuum pressures between about 200mbar and 10⁻² mbar for example, or in other applications between about 10⁻¹ mbar and 10⁻² mbar.

The motor is arranged to rotate the drive shaft in response to an electrical input received from a control 18 along a control line 20 operatively connecting the control to the motor. A typical electrical motor has stator windings, and possibly also rotor windings, for commutated excitation by the control in a brushless arrangement. The motor may be AC or DC and have any number of poles greater than or equal to two.

The control 18 comprises electrical components for providing a suitable electrical output along control line 20 for driving the motor 12. The output controls voltages, currents and frequencies in the motor. Additionally, the control may receive feedback from the motor for monitoring operation of the motor. Typically the electrical components comprise at least an inverter. The control receives electrical power along a supply line 22 from a source of electrical power (not shown). A control panel 24 may be provided in some examples and is operable by a user, for example for activating and deactivating the control and operating the vacuum pump at full or rated speed, standby speed, or other selected speeds. Alternatively or additionally, the control may be arranged to receive an input from a vacuum processing tool to activate or deactivate the pump or select the appropriate speed. In a simplified arrangement, the control is activated and deactivated in response to its operable connection to a source of electrical power (i.e. when it is switched on or off).

A pump housing 26 houses the pumping mechanism 14 and forms an enclosure for guiding pumped gas from a gas inlet 28 to a gas outlet 30. In this example the rotor part or parts 32 are fixed to the drive shaft 16 and the stator part or parts 34 are fixed to the pump housing. As shown, the stator part may be formed by an internal surface of the housing forming a volume swept by the rotor.

A motor housing 36 houses the motor 12. The motor housing is mounted to the pump housing by suitable fixings and the drive shaft extends through aligned bores 38 in the pump housing and motor housing. The bores are sealed to resist leakage of pumped gas from the pump housing. In alternative examples the pump housing and motor housing may integrated together rather than being separate components as shown. The motor housing may be formed by two or more pieces which are fixed together.

A control housing 40 houses the control 18 and provides an input for connecting the supply line 22 and an output for connecting the control line 20. The control housing comprises a mounting or coupling part 42 for mounting the control housing in fixed relation to the motor housing 36. In this regard the mounting part, or member, is fixed to the motor housing and the remaining structure of the control housing is fixed to the mounting member. Part of the mounting structure is shown by dotted lines where it is hidden in this view behind cooling fins 37 (described in more detail below).

Operation of the vacuum pump 10 generates heat due to losses, such as friction and in the case of the motor, winding and core losses. The motor 12 has a thermal operating range within which safe operation can be maintained. In particular, heat generated by the motor heats the motor housing 36. Whilst the motor itself has a thermal operating range the housing must be maintained below a selected temperature so that if it is accidentally contacted by a user it does not cause injury. For example, a housing temperature of 80°C or less may be considered acceptable, if the exterior of the housing is a painted metal surface or 65°C may be a required upper limit for a bare metal surface. The temperature limits vary from one safety standard to another.

A thermal sensor 39 is located for sensing the temperature of the motor housing 36. As it is shown the thermal sensor is located on an exterior surface of the housing. The thermal sensor is arranged to output a signal responsive to the housing temperature if an upper temperature limit is exceeded. If the surface temperature limits are exceeded in normal operation, an alert, such as an audible warning sound may be emitted. In other arrangements, the thermal sensor is operatively connected to the motor or the control 18 to restrict or prevent operation of the motor when the upper limit is exceeded.

In addition to housing temperature, the motor 12 has a thermal operating range within which safe operation can be maintained without significant risk of failure. For example the motor winding may be commonly of insulation Class F, with an associated maximum operating temperature of 155 ° C, though other Classes of Insulation are available with higher and lower temperature limits. The motor winding is cooled, for example by conduction of heat from the winding, through the motor iron and out to the motor casing. The motor casing may be cooled by forced air flow. In many applications safety standards will require the motor casing surface temperature to be below certain limits to minimise the risk to personnel.

A motor cooling mechanism 44 is located adjacent the motor housing 36 for cooling the motor or motor housing during operation. As shown in this example, the cooling mechanism is located in a cooling housing 43 which is fixed to the motor housing by suitable fixings (not shown). The cooling mechanism 44 comprises a shaft mounted fan (e.g. an array of blades fixed to the shaft) which rotates with the shaft. The fan draws cooling ambient air into the cooling housing through openings 46. The cooling gas is directed through a radially outer aperture or radially outer apertures 47 along the exterior surface of the motor housing, as shown by arrows. The flow of cooling gas generated by the cooling mechanism is generally proportional to the rotational speed of the drive shaft 16. In many cases this is desirable since generally increased rotational speeds results in increased heat generated by the motor and an increased cooling air flow is capable of removing the increased heat. However, as explained below there are circumstances in which a shaft mounted cooling mechanism is inadequate for requirements.

In order to improve heat dissipation from the motor housing and increase the contact surface area with the cooling gas, the motor housing is provided with cooling formations, which as shown are fins. These fins extend generally longitudinally from the surface of the motor housing on each side of the housing and are aligned with the flow of cooling gas so that the cooling gas travels along their lengths.

The control 18 also generates heat during operation, for example due to the current required for operation of the electrical components in the control. A control cooling mechanism 48, for example a cooling fan, is fixed in relation to the control housing 40 for cooling the control. In this example, the cooling mechanism is housed within the housing, although it may be fixed to an outer surface of the housing. The mechanism draws cooling ambient air into the control housing through opening 50 and across the control.

The control housing 40 forms at least one flow path 52 (shown by arrows) for guiding cooling gas over the control for receiving heat from the control. The flow path guides the cooling gas to at least one and preferably a plurality of openings 54 through which cooling gas is directed towards the motor housing 36 for cooling the housing (as shown by three parallel downwardly directed arrows). Electronic components 51 are in this example surface mounted on a substrate or board 53. The substrate is mounted to an internal enclosure 55 by mounts 57. Heat generated by the components is conducted by the substrate and the mounts to the enclosure. Cooling gas flow along the flow path removes heat from the internal enclosure. Whilst cooling gas flow may be directed over the electronic components this may cause contamination and therefore in this example the internal enclosure separates the gas flow from the components and additionally acts as a heat sink.

The flow path 52 as shown is generally U-shaped and passes around the internal enclosure from the fan 48 to the opening 54. A first portion of the flow path may additionally cool components 59 in a separate enclosure. The flow path may have other configurations, for example it may be bifurcated with one branch directing cooling air over the internal enclosure and the other directing cooling gas towards the motor housing. It should be noted though that the flow path illustrated has two 90° turns; each turn reduces the conductance of cooling gas which reduces flow and therefore the cooling effect on the motor. The flow path may be formed by one or more control housing parts.

The amount of cooling air drawn across the control by the control cooling mechanism is independent from the rotational speed of the pump. For example, operation of the mechanism may be responsive to a sensed temperature of the control so that the flow of cooling air is controlled as required dependent on control temperature.

In typical applications the control housing operates at a temperature lower than that of the motor housing. In some examples, the control housing may have a surface temperature limit of between about 65°C and 80°C in normal rated operation. Therefore the cooling gas flow output through opening 54 is at a lower temperature than the motor housing and can be used for additional cooling of other components such as the motor.

In operation of the vacuum pump 10, the rotational speed of the drive shaft 16 is typically maintained at rated speed for extended periods and the cooling mechanism 44 is typically arranged to maintain motor temperature within its operating range under these conditions. However, during operation at slow speeds (e.g. from 0 to 30% of rated speed) motor torque may be maintained at rated value with consequent high motor current and high losses, thereby generating similar heat to that at rated speed, particularly in the windings and the iron steel laminates of the stator. The cooling effect of the cooling mechanism is also reduced at slow speeds and so may not be sufficient to cool the motor adequately to maintain its temperature within operating range. Additional if it is required to stop the vacuum pump for a brief period (for maintenance or adjustment) the shaft mounted fan 44 provides no cooling effect. Even though the motor is not in use it is a source of residual heat, due to the large thermal capacitance of the motor body, and therefore the temperature of the motor housing may increase and exceed an upper temperature limit. The continued generation of heat, sensed by thermal sensor 39, may trigger a motor over temperature protection circuit, causing failure to start after maintenance or adjustment. A solution to this problem is provided in the example shown whereby the control cooling mechanism is operable to cool the motor independent of rotational speed of the drive shaft. In this regard, the control cooling mechanism and control housing are together arranged to generate a flow of cooling gas at least over the motor housing for cooling the motor.

The cooling mechanism 44 typically provides substantially more cooling for the motor housing than the cooling mechanism 48, sufficient to maintain the motor housing at a temperature lower than the upper limit. However the cooling effect required by mechanism 48 may in practice be relatively small; if, for example, the upper temperature of the motor housing is 65°C, and during operation the motor housing is maintained at 60°C. When the motor is stopped the temperature may ordinarily rise to 70°C causing failure to start. The cooling effect provided by mechanism 48 is often sufficient to maintain the motor housing at a temperature 5°C lower than 70°C to avoid failure to start. Therefore, even though the temperature of the cooling gas output from the control housing may be only slightly less than the temperature of the motor housing, the cooling effect provided by the mechanism 48 is sufficient to avoid pump failure.

Accordingly, when the vacuum pump is operating at slow speeds or when it has been stopped, the control cooling mechanism 48 can be configured to reduce or maintain the temperature of the motor to within its desired operating temperature range. Typical operating temperatures of the control are lower than typical operating temperatures of the motor and therefore even after cooling air from cooling mechanism 48 has cooled the control it is still at a lower temperature than the motor and therefore retains a cooling capacity.

In addition to cooling the motor when operating at slow speeds or when stopped, cooling mechanism 48 is configured to supply cooling air to cool the motor at higher motor speeds or rated motor speeds in combination with the cooling effect produced by the motor cooling mechanism 44. Therefore, the maximum cooling output, or rating, of mechanism 44 may be reduced compared to existing systems. Reducing the fan size of the mechanism 44 can provide a more efficient or compact vacuum pump.

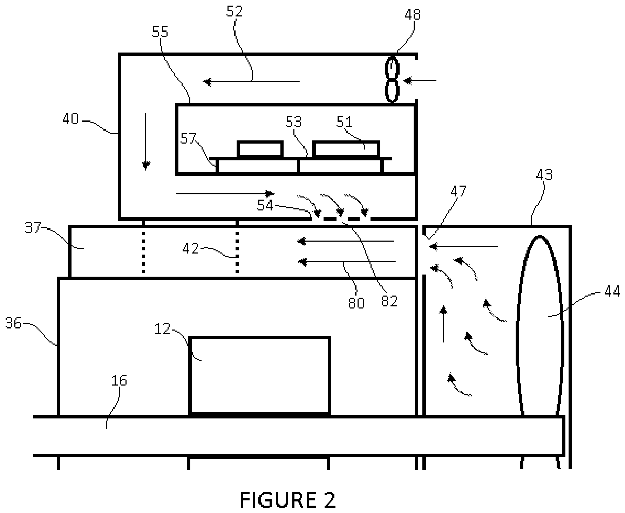

Figure 2 shows an enlarged view of part of the vacuum pump 10 for the purposes of explaining in more detail gas flow at or around the opening or openings 54. In normal operation the pump is in use and the motor is rotating both the shaft and the motor cooling mechanism 44. The cooling mechanism 44 generates a cooling gas flow 80 over the motor housing 36 mainly along the elongate space between longitudinal fins 37. The control cooling mechanism 48, when required, generates a cooling gas flow 52 in the control housing 40 around the internal enclosure 55. This gas flow is output through opening or openings 54 and in normal use may contribute to cooling of the motor. The control housing 40 is mounted to the motor housing 36 by mounts 42 so that the openings are in close proximity to the motor housing. As shown the openings are spaced a small distance (e.g. less than 10 mm) from the outer profile of the fins 37. The motor cooling mechanism generates a significant gas flow in the region 82 between the openings and the motor housing 36 as the cooling gas flow passes from the cooling enclosure 43 through opening or openings 47. Therefore, the cooling gas flow 80 reduces the pressure in region 82 below ambient pressure. The reduction in pressure in region 82 increases gas flow through the openings 54 in normal use thereby assisting cooling of the control. I.e. the openings 47 and motor cooling flow gas path are configured to increase flow through the control housing using the Venturi effect.

If there is a fault with the cooling mechanism 48 of the control or the control is inadvertently switched off the cooling gas flow 52 through the control ordinarily stops. However, in the present arrangement, the reduced pressure in region 82 caused by gas flow 80 generates a gas flow along flow path 52 due to the pressure differential across the opening 54. Therefore, even without the control cooling mechanism 48, the control is cooled by the motor cooling mechanism 44.

Therefore, when the motor cooling mechanism 44 is not generating any or sufficient cooling gas flow, the control cooling mechanism 48 is arranged to cool the motor; and when the control cooling mechanism is not operational the motor cooling mechanism is configured to cools the control.

In most arrangements, the motor cooling mechanism 44 is required as a back-up for cooling the control only when there is a fault with the control cooling mechanism 48 or if it is switched off. In this way, the back-up cooling maybe temporary and required for only a short period, for instance until maintenance is performed on the control.

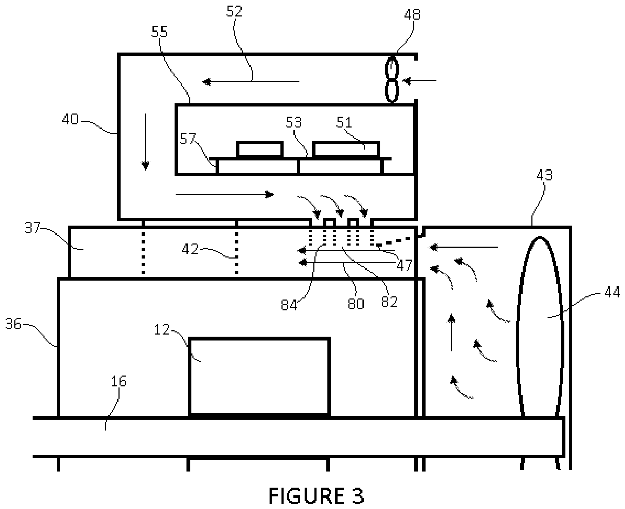

The opening or openings may be configured in any suitable manner to increase the Venturi effect described above in relation to Figure 2. Figure 3 shows an arrangement in which the outlet of the flow path 52 is formed by an opening or openings 84 to reduce the pressure at the openings. In this regard, the openings are extended towards the motor housing 36 from the control housing 40. The parts of the extended openings hidden by fin 37 in this view are shown in dotted lines. The extended opening may be cast or moulded with the control housing to form one or more hollow tubes of any suitable uniform or non-uniform cross-section. The extended openings reduce the spacing between the openings and the motor housing 36 forming a restriction which increases the speed of gas flow in the region 82.

Additionally or alternatively, the opening or openings 47 of the cooling housing 43 may be extended and tapered for further restriction of flow. The part of the opening 47 hidden in this view by fin 37 is shown in broken lines. The tapered opening 47 in this example if formed by extending the outer surface of the cooling housing 43 axially and inwardly towards the motor in the region of the openings 84 for convergence of the gas flow 80.

## Claims

1. A vacuum pump (10) comprising:
a motor (12) for driving a vacuum pumping mechanism (14) of the pump, the motor being housed in a motor housing (36);
a drive shaft (16) supporting the pumping mechanism for rotation when the motor rotates the drive shaft;
a motor cooling mechanism (44) supported for rotation by the drive shaft, configured to generate a flow of cooling gas along a first flow path (80) for cooling the motor housing when the motor rotates the drive shaft;
a control (18) for controlling the motor,
a control cooling mechanism (48) for generating a cooling gas flow along a second flow path (52) for guiding a cooling gas for cooling the control and for guiding the cooling gas flow to at least one opening (54) of a control housing (40);
wherein the control housing is arranged to be mounted in fixed relation to the motor housing with said at least one opening in the first flow path so that the cooling gas flow along the second flow path cools the motor housing when the motor cooling mechanism is inoperative; and
wherein the gas flow along the first flow path (80) causes gas flow along the second flow path (52) when the control cooling mechanism is inoperative.

## Patentansprüche

1. Vakuumpumpe (10) mit:
einem Motor (12) zum Antreiben eines Vakuumpumpenmechanismus (14) der Pumpe, wobei der Motor in einem Motorgehäuse (36) untergebracht ist;
einer Antriebswelle (16), die den Pumpenmechanismus drehbar trägt, wenn der Motor die Antriebswelle dreht;
einem Motorkühlmechanismus (44), der von der Antriebswelle drehbar getragen wird und dafür konfiguriert ist, eine Kühlgasströmung entlang eines ersten Pfads (80) zum Kühlen des Motorgehäuses zu erzeugen, wenn der Motor die Antriebswelle dreht; einer Steuerung (18) zur Steuerung des Motors,
einem Steuerungskühlmechanismus (48) zum Erzeugen einer Kühlgasströmung entlang eines zweiten Strömungspfads (52) zum Führen eines Kühlgases zum Kühlen der Steuerung und zum Führen der Kühlgasströmung zu mindestens einer Öffnung (54) eines Steuerungsgehäuses (40),
wobei das Steuerungsgehäuse dafür angeordnet ist, in fester Relation zu dem Motorgehäuse montiert zu werden, wobei die mindestens eine Öffnung in dem ersten Strömungspfad so liegt, dass die Kühlgasströmung entlang des zweiten Strömungspfads das Motorgehäuse kühlt, wenn der Motorkühlmechanismus nicht arbeitet; und
wobei die Gasströmung entlang des ersten Strömungspfads (80) eine Gasströmung entlang des zweiten Strömungspfads (52) bewirkt, wenn der Steuerungskühlmechanismus nicht arbeitet.

## Revendications

1. Pompe à vide (10) comprenant :
un moteur (12) pour entraîner un mécanisme de pompage à vide (14) de la pompe, le moteur étant logé dans un carter de moteur (36) ;
un arbre d'entraînement (16) supportant le mécanisme de pompage pour rotation lorsque le moteur fait tourner l'arbre d'entraînement ;
un mécanisme de refroidissement de moteur (44) supporté pour rotation par l'arbre d'entraînement, configuré pour générer un écoulement de gaz de refroidissement le long d'un premier chemin d'écoulement (80) pour refroidir le carter de moteur lorsque le moteur fait tourner l'arbre d'entraînement ;
une commande (18) pour commander le moteur,
un mécanisme de refroidissement de commande (48) pour générer un écoulement de gaz de refroidissement le long d'un second chemin d'écoulement (52) pour guider un gaz de refroidissement pour refroidir la commande et pour guider l'écoulement de gaz de refroidissement jusqu'à au moins une ouverture (54) d'un carter de commande (40) ;
dans laquelle le carter de commande est conçu pour être monté en relation fixe par rapport au carter de moteur avec ladite au moins une ouverture dans le premier chemin d'écoulement de telle sorte que l'écoulement de gaz de refroidissement le long du second chemin d'écoulement refroidit le carter de moteur lorsque le mécanisme de refroidissement de moteur est inactif ; et
dans laquelle l'écoulement de gaz le long du premier chemin d'écoulement (80) entraine un écoulement de gaz le long du second chemin d'écoulement (52) lorsque le mécanisme de refroidissement de commande est inactif.
